# EUROPEAN PATENT APPLICATION

(11) **EP 4 836 254 A1**
(43) Date of publication of application: **04.11.2026**
(21) Application number: 24913724.1
(22) Date of filing: 27.12.2024
(51) Int. Cl.: H02K 7/08, H02K 5/16, H02K 5/24, G01S 7/481, H02J 50/10

(54) **LIDAR DRIVING DEVICE AND LIDAR DEVICE**

(30) Priority: 28.12.2023 KR 20230195686
(71) Applicant: LG Innotek Co., Ltd., Seoul 07796 (KR)
(72) Inventor: PARK, Young Dae, Seoul 07796 (KR); YU, Hyun Soo, Seoul 07796 (KR); CHOI, Jin Myung, Seoul 07796 (KR)
(74) Representative: Plasseraud IP
(86) International application number: PCT/KR2024/021357
(87) International publication number: WO 2025/143920

(57) **Abstract**

A LiDAR driving device according to an embodiment of the present invention may include: A stator housing having a first fixed side wall and a second fixed side wall arranged in a ring shape from an inner side to an outer side, and having a lower central hole; a central shaft; a rotor housing having an upper central hole, a first rotating side wall disposed around an outer circumference of the central shaft, and a second rotating side wall disposed between the first rotating side wall and the second fixed side wall; a first bearing member coupled between an inner side of the second fixed side wall and an outer side of the second rotating side wall; and a second bearing member coupled between the central shaft and an inner side of the first rotating side wall.

## Description

### Technical field

The present invention relates to a LiDAR driving device and a LiDAR device. The present invention relates to a LiDAR device having a rotatable sensor unit and a fixed support unit.

### Background Art

An autonomous vehicle (AV) uses a plurality of sensors for situation recognition. Sensors that are part of a self-driving system (SDS) of an autonomous vehicle may include one or more of a camera, a LiDAR (Light Detection and Ranging) device, and an inertial measurement unit (IMU). Sensors such as cameras and LiDAR are used to capture and analyze surrounding scenes of the vehicle. The captured scenes are then used to detect objects including static objects such as fixed structures and dynamic objects such as pedestrians and other vehicles. In addition, data collected from the sensors may be used to detect conditions such as road markings, lane curvature, traffic lights, and signs. Furthermore, a scene representation such as a three-dimensional point cloud obtained from the LiDAR of the vehicle may be combined with one or more images obtained from a camera to obtain additional insight into a scene or situation around the vehicle.

In addition, a LiDAR transceiver may include a transmitter that transmits light in ultraviolet (UV), visible light, and infrared spectral regions, and one or more photodetectors that convert light or other electromagnetic radiation into electrical signals. In order to provide high-fidelity object detection and tracking, an optical sensor such as LiDAR requires rigidly fixed optical components, and sufficient space for one or more transceiver assemblies, processing and driver circuits, cooling elements, cleaning elements, wiring, and motor assemblies. The LiDAR may also include transceiver components rigidly fixed relative to each other in order to withstand automotive-grade vibration, high-speed rotation of a mechanical LiDAR assembly, and to address balance and weight considerations. In addition, sufficient packaging accommodation is required for the LiDAR, and aesthetic considerations should also be taken into account.

### Summary of Invention

### Technical Problem

An embodiment of the present invention may provide a LiDAR driving device and a LiDAR device capable of supporting a rotor housing rotating using a stator housing and a central shaft. An embodiment of the present invention may provide a LiDAR driving device and a LiDAR device having a structure for preventing separation of a first bearing member coupled between the stator housing and the rotor housing. An embodiment of the present invention may provide a LiDAR driving device and a LiDAR device having a structure for preventing separation of a second bearing member coupled between the rotor housing and the central shaft.

An embodiment of the present invention may provide a LiDAR driving device and a LiDAR device capable of distributing and supporting a load by assembling a first bearing member having a large diameter and a second bearing member having a small diameter. An embodiment of the present invention may provide a LiDAR device having a structure for preventing axial separation of an inner ring and an outer ring of a first bearing member having a relatively large diameter.

### Solution to Problem

A LiDAR driving device according to an embodiment of the present invention may include: A stator housing having a first fixed side wall and a second fixed side wall arranged in a ring shape from an inner side to an outer side, and having a lower central hole; a central shaft; a rotor housing having an upper central hole, a first rotating side wall disposed around an outer circumference of the central shaft, and a second rotating side wall disposed between the first rotating side wall and the second fixed side wall; a first bearing member coupled between an inner side of the second fixed side wall and an outer side of the second rotating side wall; and a second bearing member coupled between the central shaft and an inner side of the first rotating side wall.

According to the embodiment of the present invention, the first fixed side wall may include a plurality of inner protrusions protruding toward an upper outer side of the first bearing member along an inner side of an upper end thereof. The second rotating side wall may include a plurality of outer protrusions protruding toward a lower inner side of the first bearing member along an inner side of a lower end thereof.

According to the embodiment of the present invention, a bottom portion of the stator housing may have a plurality of bottom holes corresponding to the respective outer protrusions. A number of the plurality of inner protrusions may be greater than a number of the plurality of outer protrusions. An upper end of the second fixed side wall may be positioned higher than an upper end of the first bearing member. A lower end of the second rotating side wall may be positioned lower than an upper end of the second bearing member, and the second rotating side wall may have a recess in which a first inner ring of the first bearing member is disposed at a lower inner side thereof.

According to the embodiment of the present invention, the stator housing may include a bottom support portion disposed at a lower end of the central shaft and a rotation preventing portion disposed around a lower circumference of the central shaft, wherein the bottom support portion and the rotation preventing portion are disposed at an inner end of a bottom portion of the stator housing, and the first and second fixed side walls protrude from the bottom portion. The present invention may further comprise a fastening means fastened to a lower portion of the central shaft through a central hole in the bottom support portion.

According to the embodiment of the present invention, the present invention may further comprise: a lower stop protrusion extending from the first rotating side wall toward a lower outer side of the second bearing member; a stop ring disposed around an upper portion of the second bearing member and coupled to the central shaft; and a washer disposed between the stop protrusion and the second bearing member. The first bearing member may have an inner diameter that is at least twice as large as an outer diameter thereof and a width greater than a width of the second bearing member.

A LiDAR device according to an embodiment of the present invention may comprise: a stator housing having a first fixed side wall and a second fixed side wall arranged in a ring shape from an inner side to an outer side, and having a lower central hole; a central shaft; a rotor housing having an upper central hole, a first rotating side wall disposed around an outer circumference of the central shaft, and a second rotating side wall disposed between the first rotating side wall and the second fixed side wall; a first bearing member coupled between an inner side of the second fixed side wall and an outer side of the second rotating side wall; a second bearing member coupled between the central shaft and an inner side of the first rotating side wall; a motor disposed between the stator housing and the rotor housing and having a magnet and a core; and a transceiver coupled to the rotor housing and configured to transmit and receive a laser beam, an inner diameter of the second bearing member may be greater than an outer diameter of the first bearing member and smaller than an inner diameter of the magnet of the motor, and the rotor housing and the transceiver may rotate about the central shaft.

According to the embodiment of the present invention, a width of the first bearing member may be greater than a width of the second bearing member, and the present invention may further comprise a wireless power transmission module disposed between an inner side of the second rotating side wall and outer sides of the first fixed side wall and the first rotating side wall.

According to the embodiment of the present invention, the first fixed side wall includes a plurality of inner protrusions protruding toward an upper outer side of the first bearing member along an inner side of an upper end thereof, and the second rotating side wall may include a plurality of outer protrusions protruding toward a lower inner side of the first bearing member along an inner side of a lower end thereof.

According to the embodiment of the present invention, the stator housing may include a bottom support portion disposed at a lower end of the central shaft and a rotation preventing portion disposed around a lower circumference of the central shaft, the bottom support portion and the rotation preventing portion may be disposed at an inner end of a bottom portion of the stator housing, first and second fixed side walls protrude from the bottom portion, and the present invention may further comprise a fastening means fastened to a lower portion of the central shaft through a central hole in the bottom support portion.

According to the embodiment of the present invention, the present invention may further comprise: a lower stop protrusion extending from the first rotating side wall toward a lower outer side of the second bearing member; a stop ring disposed around an upper portion of the second bearing member and coupled to the central shaft; and a washer disposed between the stop protrusion and the second bearing member.

### Advantageous Effects of Invention

According to an embodiment of the present invention, a first bearing member is coupled between the stator housing and the rotor housing, thereby distributing and supporting excessive loads and preventing deterioration of coupling force between the two housings. According to an embodiment of the present invention, movement of opposite sides of the first bearing member is suppressed, thereby reducing vibration or impact transmitted to the rotor housing through the first bearing member. According to an embodiment of the present invention, assembly of the stator housing, the first bearing member, the central shaft, the rotor housing, and the second bearing member is facilitated, thereby improving assemblability of the LiDAR driving device.

The present invention may prevent performance degradation of a LiDAR device having the LiDAR driving device, improve operational reliability, and extend lifespan. In addition, reliability degradation of a moving body such as a vehicle equipped with the LiDAR device may be prevented.

### Brief Description of Drawings

FIG. 1 is a perspective view of a vehicle having a LiDAR system according to an embodiment of the present invention.
FIG. 2 is an example of a block diagram of a vehicle system having the LiDAR system of FIG. 1.
FIG. 3 is a perspective view of a LiDAR device according to an embodiment of the present invention.
FIG. 4 is a perspective view of the LiDAR device of FIG. 3 viewed from another direction.
FIG. 5 is an example of a side cross-sectional view of the LiDAR device of FIG. 3.
FIG. 6 is an example of a perspective view of the LiDAR driving device of FIG. 3.
FIG. 7 is a cross-sectional view taken along line A-A of the LiDAR driving device of FIG. 6.
FIG. 8 is a cross-sectional view taken along line B-B of the LiDAR driving device of FIG. 6, in which a bottom cover and an internal substrate are removed.
FIG. 9 is an exploded perspective view of a stator housing, a first bearing member, a rotor housing, and a central shaft of FIGS. 7 and 8.
FIGS. 10(a) and 10(b) are front and rear perspective views of the stator housing of FIG. 9.
FIG. 11 is a view illustrating a process of assembling the first bearing member to the stator housing of FIG. 9.
FIG. 12 is a view illustrating a process of fixing an upper portion of the first bearing member after staking using a staking jig inside the stator housing of FIG. 11.
FIG. 13 is a perspective view of the stator housing coupled with the first bearing member of FIG. 12.
FIG. 14 is a partial cross-sectional view showing coupling between the stator housing and the first bearing member of FIG. 13.
FIG. 15 is a view illustrating a process of coupling the central shaft to the stator housing of FIG. 9.
FIG. 16 is a partial cross-sectional view showing an example of coupling of a lower portion of the stator housing and the central shaft of FIG. 15.
FIG. 17 is a view illustrating a process of coupling the stator housing and the rotor housing of FIG. 9.
FIG. 18 is a view illustrating a process of coupling the second bearing member around an upper circumference of the central shaft of FIG. 17.
FIG. 19 is a cross-sectional view showing coupling of the stator housing, the rotor housing, and the first bearing member of FIG. 18.
FIG. 20 is a cross-sectional view showing coupling of the stator housing, the rotor housing, and the second bearing member of FIG. 18.
FIG. 21(a) is a view illustrating a process of staking a lower portion of the first bearing member using a staking jig through a bottom hole of the stator housing, and (b) is a perspective view illustrating an example of fixing a lower portion of the second bearing member.
FIG. 22 is a partial cross-sectional view showing protrusions for fixing upper and lower portions of the first bearing member of FIG. 21.
FIG. 23 is a cross-sectional view showing another example of the LiDAR device of FIG. 5.

### Description of Embodiments

Hereinafter, embodiments will be described in detail with reference to the accompanying drawings in which like reference numerals refer to like elements. However, the present invention may be implemented in various different forms and is not limited to the embodiments illustrated herein. Rather, these embodiments are provided so that this disclosure will be thorough and complete, and will fully convey the features and functions of the present invention to those skilled in the art. Accordingly, processes, elements, and techniques that are not necessary for a person having ordinary skill in the art to fully understand the features and functions of the present invention may not be described. Unless otherwise stated, like reference numerals indicate like elements in the accompanying drawings and the written description, and thus descriptions thereof will not be repeated.

A LiDAR system may be referred to as a depth detection system, a laser ranging system, a laser radar system, a LIDAR system, or a laser/optical detection and ranging (LADAR) system. LiDAR is a type of distance measurement sensor characterized by a long sensing range, high resolution, and low interference from the environment. LiDAR has been widely applied in intelligent robots, unmanned aerial vehicles, autonomous driving, or self-driving fields. The operating principle of LiDAR is to estimate a distance based on a round-trip time of electromagnetic waves (for example, time of flight or delay time) between a source and a target. A LiDAR system measures a distance (for example, depth) to an object by emitting a light pulse (for example, a laser pulse) toward the object and measuring a time taken for the light pulse to be reflected from the object and detected by a sensor of the LiDAR system.

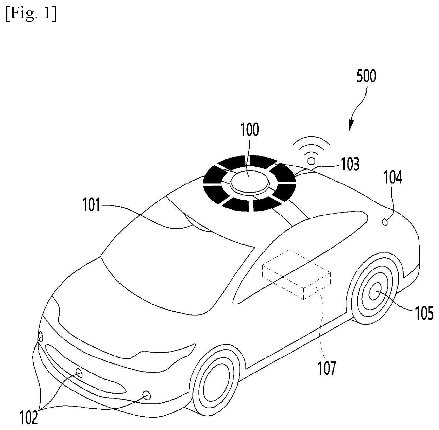

The above-described aspects and features of embodiments of the present invention will be described in more detail with reference to the drawings. FIG. 1 is a perspective view of a vehicle having a LiDAR system according to an embodiment of the present invention.

Referring to FIG. 1, a moving object such as a vehicle (500) may include a LiDAR system (100), a camera unit (101), vehicle recognition sensors (102, 104), a GPS (Global Positioning System) sensor (103), a vehicle control module (107), and an ultrasonic sensor (105).

The LiDAR system (100) is a device having a rotating imaging unit or sensor unit, is coupled to a part of the vehicle (500), rotates 360 degrees, senses distances between the vehicle and objects (static objects and dynamic objects), surrounding environments, and shapes, and controls driving using the measured data. Using such sensing technology, surrounding objects or environments of the vehicle may be collected and analyzed in the form of a three-dimensional point cloud, and sensing data providing information on objects located within an appropriate proximity range may be generated.

The LiDAR system (100) may communicate with the vehicle control module (107) and transmit/receive information related to driving of the vehicle. The vehicle control module (107) may communicate with various systems or sensors inside the vehicle and perform various control operations. The vehicle control module (107) is a device for controlling and monitoring various systems of the vehicle and may include a control device such as an electronic control unit (ECU). The vehicle control module (107) may communicate with an external mobile device and may be electrically connected to a detachable storage device.

The camera unit (101) may be installed inside and/or outside the vehicle in one or more numbers, and may capture front images and/or rear images of the traveling vehicle and provide or store the captured images through a display device (not shown). The captured image data may optionally include audio data. In another example, the camera unit (101) may be mounted at the front, rear, each corner, or each side of the vehicle (500) to capture surrounding images of the vehicle and provide them through a display device (not shown). The vehicle control module (107) or another processor may identify traffic lights, vehicles, pedestrians, and the like based on the data captured by the camera unit (101) and provide the obtained information to a driver. Such a camera unit (101) may be used as a driving assistance device.

Front radars (102) are installed in plurality at a front of the vehicle (500) and detect a distance between the vehicle (500) and a front object. Rear radars (104) are installed in plurality at a rear of the vehicle (500) and detect a distance between the vehicle (500) and a rear object. When object information is detected through the radars (102, 104), surrounding objects or obstacles may be detected and notified to the driver through an alarm or warning message.

The GPS sensor (103) may receive signals from satellites and provide them to devices such as the vehicle control module (107), the LiDAR system (100), and the camera unit (101), and the devices may provide or calculate information such as position, speed, and time of the vehicle based on GPS position signals. The ultrasonic sensor (105) may sense a distance from a nearby vehicle or obstacle to provide convenience for safely parking the vehicle in a parking space. In addition, the ultrasonic sensor (105) may prevent accidents that may occur during driving. Such ultrasonic sensors (105) may be installed at a rear, side, or wheels of the vehicle.

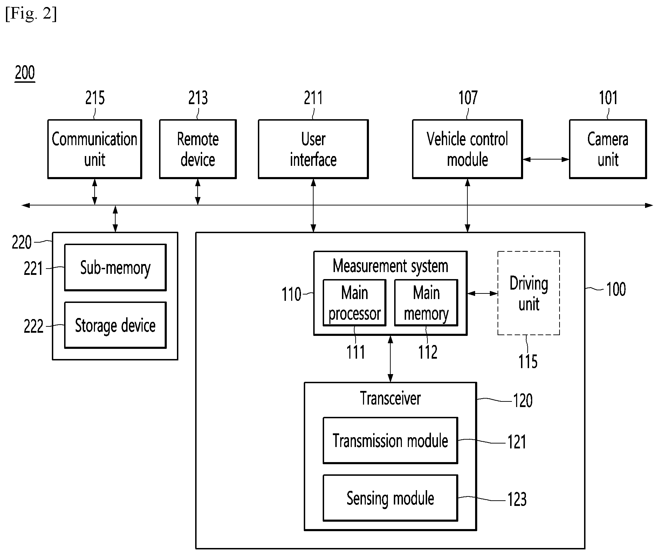

As shown in FIG. 2, a vehicle system (200) including the LiDAR system (100) and the vehicle control module (107) receives an input from a user or driver or provides information to the user or driver through a user interface (211). The user interface (211) may include a display device, a touch panel, a button, voice recognition, and wired or wireless input devices, and may be connected in a wired or wireless manner to enable communication between the driver and various devices. The vehicle system (200) communicates with a remote device (213), and the remote device (213) may communicate remotely with a user or an external entity or receive an external control signal. A communication unit (215) may support wired or wireless communication and may be, for example, a wired or wireless module. The storage unit (220) may include one or more sub-memories (221) therein. The storage unit (220) may further include a portable or detachable storage device (222). The LiDAR system (100) may communicate with the user interface (211) and the camera unit (101).

The LiDAR system (100) includes a driving unit (115) such as a motor, and the driving unit (115) may rotate a part or the entirety of the LiDAR system (100) by 360 degrees according to a control signal. The driving unit (115) includes a fixed portion (e.g., a stator) fixed to a moving body such as a vehicle, and a rotating portion (e.g., a rotor) rotating together with a sensor device, communicates with an internal configuration of the LiDAR system (100), for example, a measurement system (110), and enables axial rotation of the LiDAR system (100).

The LiDAR system (100) may include a measurement system (110) and at least one transceiver (120). The driving unit (115) is coupled to the measurement system (110) and the transceiver (120) to allow them to rotate and may transmit a driving force. The transceiver (120) is a device for transmitting and receiving a laser beam for recognizing an object.

The measurement system (110) may include a main processor (111) and a main memory (112), and the main processor (111) may be implemented as a general-purpose processor, an ASIC (Application Specific Integrated Circuit), one or more FPGAs (Field Programmable Gate Arrays), a group of processing components, or other suitable electronic processing components. The main memory (112) may include one or more devices (e.g., RAM, ROM, flash memory, hard disk storage, etc.) for storing data and/or computer code for completing or facilitating various processes described in the present invention. The main memory (112) may be or include volatile memory or non-volatile memory. The main memory (112) may include database components, object code components, script components, or any other type of information structures to support various activities and information structures described in the present invention. According to an embodiment, the main memory (112) may be communicatively connected to the main processor (111).

The measurement system (110) may include one or more processors. The one or more processors may be connected to a communication infrastructure or bus. In addition, each of the one or more processors may be a graphics processing unit (GPU). The measurement system (110) may be connected as a computer system to one or more user input/output devices such as a monitor, a keyboard, and a pointing device.

Within the LiDAR system (100), the transceiver (120) may be arranged as one or a plurality. When a plurality of transceivers are arranged, laser beams may be emitted and sensed in different directions based on a rotation axis.

The transceiver (120) includes a transmission module (121) and a sensing module (123). The transmission module (121) transmits a laser beam, and the sensing module (123) senses the laser beam transmitted by the transmission module (121). The transmission module (121) may include a light source array (not shown), and the sensing module (123) may include a receiving optical system (not shown) and a sensor array (not shown). The transmission module (121) may include a processor or control module, such as a general-purpose processor, ASIC, or FPGA, capable of controlling driving of the light source array and emission of optical signals, and may also include an internal memory in which code for controlling generation of a laser beam is stored.

The light source array may include a plurality of light sources that generate laser beams or optical pulses. The light sources may include light sources such as LD (laser diode), edge emitting laser, vertical-cavity surface emitting laser (VCSEL), distributed feedback laser, LED (light emitting diode), SLD (super luminescent diode), and the like. However, the present invention is not limited thereto. The sensing module (123) converts a raw histogram based on signals sensed through the receiving optical system and may include a processor having a matching filter, a peak detection circuit, and SPAD saturation and quenching circuits. Such a processor may be implemented as a general-purpose processor, an ASIC (Application Specific Integrated Circuit), one or more FPGAs (Field Programmable Gate Array), a group of processing components, or other suitable electronic processing components. The sensing module (123) may include a memory (not shown) having one or more devices (e.g., RAM, ROM, flash memory, hard disk storage, etc.) for storing detected optical signals therein.

Hereinafter, a LiDAR device and a LiDAR driving device including a LiDAR system will be described with reference to the drawings.

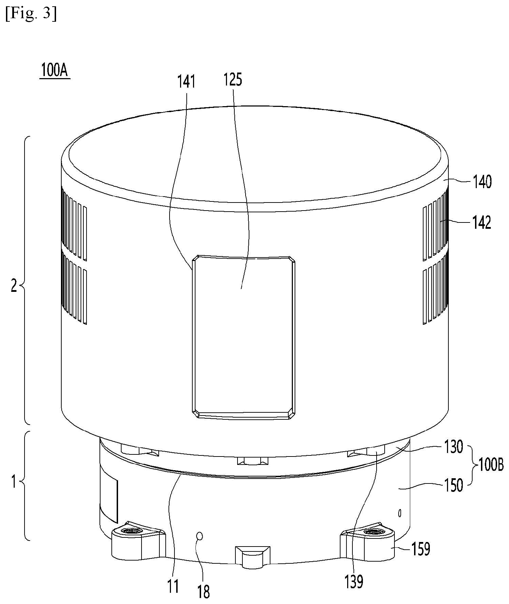

As shown in FIGS. 3 to 5, a LiDAR device (100A) may include a fixed part (1) and a rotating part (2) having a cover (140). The fixed part (1) is coupled to a part of a moving object such as a vehicle, and may be embedded in the moving object or may protrude from the moving object. The fixed part (1) may include a bottom cover (180), a first substrate (158), and a stator housing (150). The stator housing (150) and the bottom cover (180) may be separated from each other or integrally formed, and the stator housing (150) has a plurality of fastening portions (159) and may be fastened to the moving object by fastening means such as screws.

The rotating part (2) may be rotated on the moving object by a driving force of a motor (40). The rotation of the rotating part (2) may be axial rotation. The rotating part (2) may include the transceiver (120), a rotatable rotor housing (130), and a second substrate (148). The transceiver (120) may rotate together with the rotor housing (130). The second substrate (148) is electrically connected to the transceiver (120) and may receive wireless power from the fixed part (1). The rotating part (2) and the fixed part (1) have wireless transmission/reception units and may transmit/receive wireless data. The second substrate (148) may be disposed on the rotor housing (130) and may be disposed below the transceiver (120).

The LiDAR driving device (100B) may include the stator housing (150), the rotor housing (130), and components coupled to at least one of the stator housing (150) and the rotor housing (130), for example, bearing members (50, 60), a motor (40), a central shaft (311), and the like.

A protective case (145) for protecting the transceiver (120) may be disposed inside the cover (140). A lower portion of the cover (140) is disposed on an upper circumference of the fixed part (1) and covers an upper circumference of the rotating part (2). The cover (140) has a cylindrical shape with an open lower portion, includes the transceiver (120) therein, and rotates together with the rotating part (2).

The cover (140) is made of an opaque material, includes a metal or non-metal material, covers a circumference of the transceiver (120), and may include an opening (141) for transmission/reception of a laser beam. The opening (141) may be disposed on a transmission/reception path of the transceiver (120). The cover (140) is coupled to the rotor housing (130) and may rotate together with the rotor housing (130). Alternatively, when the cover (140) is made of a transparent material and is coupled to the stator housing (150), the cover (140) may not rotate, and the transceiver (120) may rotate together with the rotor housing (130).

The transceiver (120) includes a transmission module (121) and a sensing module (123), and the transmission module (121) may be disposed at one side of the sensing module (123) or at one side of a window (125). The transmission module (121) has a light source array and may be disposed in a region adjacent to the window (125) to minimize loss or interference of a laser beam.

The sensing module (123) includes a sensor unit (21), a sensor substrate (24), an optical system (22), and an optical guide part (23), and the optical guide part (23) may guide an incident laser beam to the optical system (22), and an incident-side diameter may be larger than an emission-side diameter. That is, the optical guide part (23) may have a funnel shape having a wide inlet and a narrow outlet, and may be in close contact with the window (125). The optical system (22) has one or more lenses and focuses the laser beam to the sensor unit (21) by adjusting resolution and refractive power of the laser beam incident through the optical guide part (23), and the sensor unit (21) converts the incident laser beam into an electrical signal. The sensor substrate (24) is electrically connected to the sensor unit (21) and transmits the received signal to a processor and memory in the fixed part (1) through a third substrate (128) and the second substrate (148).

The optical guide part (23) may be provided in an inclined structure together with optical axes of lenses of the optical system (22). The transceiver (120) provides the transmission module (121) and the sensing module (123) as one pair, but may include a plurality of transmission modules and a plurality of sensing modules having different fields of view and transmitting/receiving laser beams in opposite directions.

The cover (140) includes a heat dissipation part (142) having a plurality of holes penetrating from an inside to an outside, and the heat dissipation part (142) may dissipate heat generated inside to the outside. The heat dissipation part (142) may be disposed in a plurality of heat dissipation regions on an outer circumference of the cover (140), and a plurality of holes may be arranged in each heat dissipation region. For example, the plurality of heat dissipation regions may be disposed at an outer side of the light source part (121) of the transceiver (120) and at outer sides of the sensor unit (21) and the sensor substrate (24), respectively. The window (125) is exposed at the opening (141) of the cover (140), and the window (125) may be disposed on a transmission/reception region of the transceiver (120) to transmit the laser beam. The window (15) may be made of a transparent material. The window (15) may be made of a transparent material.

A protective case (125) is provided in an inner region (140A) of the cover (140), and the protective case (125) may block moisture or foreign substances from penetrating into an inside of the protective case (145) when they enter from an outside of the cover (140). Accordingly, the protective case (145) may protect the transceiver (120) and internal substrates (128, 148). The cover (140) and the protective case (145) may be fastened to the rotor housing (130) by fastening means. The protective case (145) may have a shape corresponding to an inner shape of the cover (140), for example, a cylindrical shape with a closed upper portion and an open lower portion. The window (125) may be coupled to one side of the protective case (145).

At least one or both of the cover (140) and the protective case (145) may be fastened to the rotor housing (130) by fastening means. An outer circumference of the rotor housing (130) includes a cover fastening portion (139), and the cover fastening portion (139) may be coupled to another frame through fastening means.

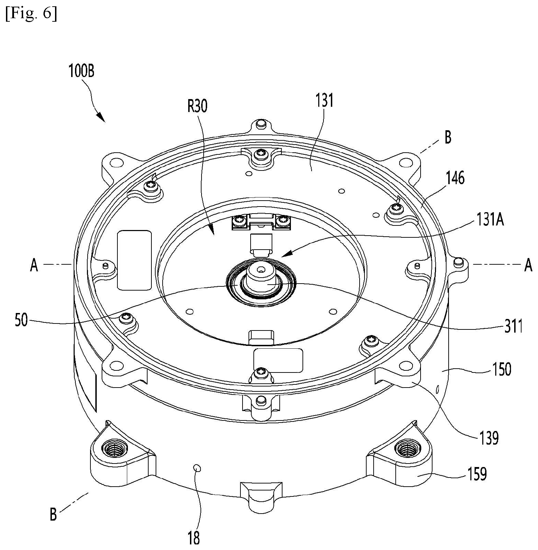

Further, the cover (140) and the protective case (145) may be coupled to the rotor housing (130). As shown in FIG. 6, an outer upper circumference of the rotor housing (130) has a concave ring-shaped groove, and a ring-shaped gasket (146) is coupled to the groove, and the gasket (146) may be in close contact with the rotor housing (130) and the protective case (145) or another frame.

A connector (190) may be coupled to a part of the bottom cover (180). Alternatively, a power connector (190) may be coupled to a part of the stator housing (150). That is, the connector (190) may be coupled to an outer side wall of the stator housing (150). The connector (190) is connected to the first substrate (158) or another substrate and may provide power or transmit/receive data.

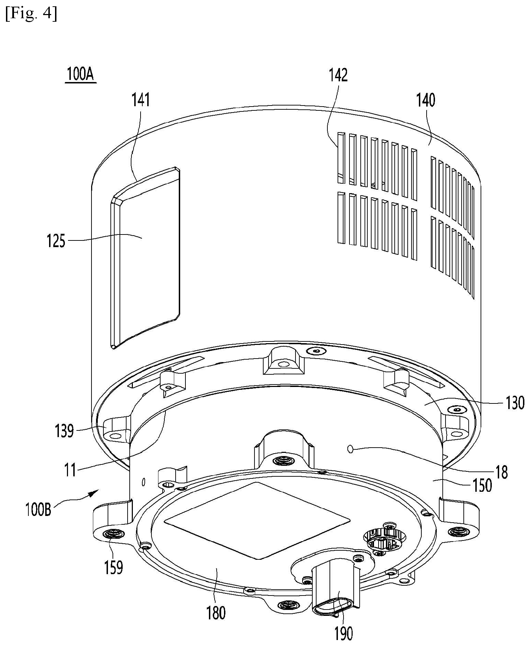

An outer circumference of the stator housing (150) has a cylindrical shape, and an outer circumference of the rotor housing (130) may have a cylindrical shape. An outer diameter of the stator housing (150) and an outer diameter of the rotor housing (130) may be the same, or the outer diameter of the rotor housing (130) may be larger than the outer diameter of the stator housing (150). Here, the outer diameter is an outer circumference of regions where the stator housing (150) and the rotor housing (130) correspond to each other. As shown in FIG. 4, a region between the stator housing (150) and the rotor housing (130) may have a gap (11). The gap (11) may be formed along a circumference between the stator housing (150) and the rotor housing (130). An inner or outer portion of the gap (11) may have a stepped structure to prevent inflow of external foreign substances.

A part of the motor (50) may be disposed inside the gap (11). A part of the motor (50) may be in close contact with an inner region of the stator housing (150) or the rotor housing (130). Such a part of the motor (50) is located inside the gap (11) to block a path through which moisture or foreign substances penetrate from outside to inside. Further, a part of the motor (50) may be disposed higher than an upper end of the gap (11) to increase an inflow path and suppress inflow of moisture or foreign substances. A part of the motor (50) disposed inside the gap (11) may be a yoke or a motor core.

A coupling region of the stator housing (150) and the rotor housing (130) of the LiDAR driving device (100B) may include the first substrate (158) disposed on the bottom cover (180), the central shaft (311), a wireless power transmission module (30) coupled to the stator housing (150) and the rotor housing (130), bearing members (50, 60), and the motor (40).

The central shaft (311) guides axial rotation of the rotor housing (130) at a center of the stator housing (150) together with the first substrate (158). A lower portion of the central shaft (311) may be fastened to a part of the stator housing (150) by a fastening means (319). An upper portion of the central shaft (311) may be in contact with or electrically connected to a part of the second substrate (148). An encoder module (not shown) is coupled to the coupling region of the stator housing (150) and the rotor housing (130), and the encoder module may detect a rotation direction and position using an encoder disk and an optical sensor.

An upper end of the central shaft (311) may protrude into an inner recess (R30) of the rotor housing (130). A second bearing member (50) may be coupled to an upper central hole (131A) of the rotor housing (130) and may be connected to the inner recess (R30).

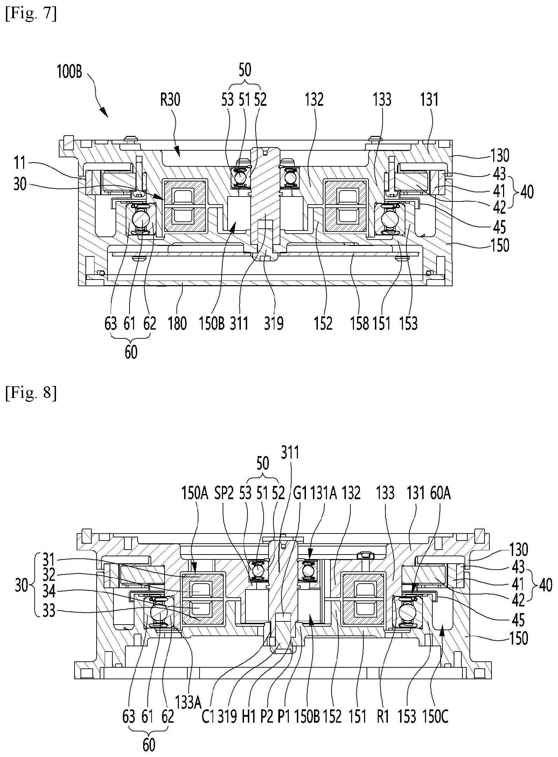

As shown in FIGS. 7, 8, 9, and 16, the central shaft (311) includes vertical flat surfaces (C1) on both lower sides, and the vertical flat surfaces (C1) suppress rotation of the shaft (311) and may be closely coupled to the stator housing (150). The central shaft (311) is disposed on a lower central hole (H1) of the stator housing (150) through an upper central hole (131A) of the rotor housing (130). A lower circumference of the central shaft (311) is disposed inside a rotation preventing portion (P1) of a bottom portion (151) of the stator housing (150), and a part of the rotation preventing portion (P1) may be in close contact with the vertical flat surfaces (C1). A bottom support portion (P2) is disposed around the lower central hole (H1) to support a bottom of the central shaft (311). The rotation preventing portion (P1) and the bottom support portion (P2) prevent rotation of the central shaft (311) and may limit downward movement thereof.

A fastening groove (G1) is formed in a lower portion of the central shaft (311), and a fastening means (319) is fastened to the fastening groove (G1). Accordingly, the fastening means (319) may fix the bottom support portion (P2) and the central shaft (311) through the lower central hole (H1) of the stator housing (150). An inner diameter of the central hole (H1) of the stator housing (150) may be smaller than an inner diameter of the central hole (131A) of the rotator housing (130) . This facilitates insertion of the central shaft (311) and enhances a coupling force between the stator housing (150) and the central shaft (311).

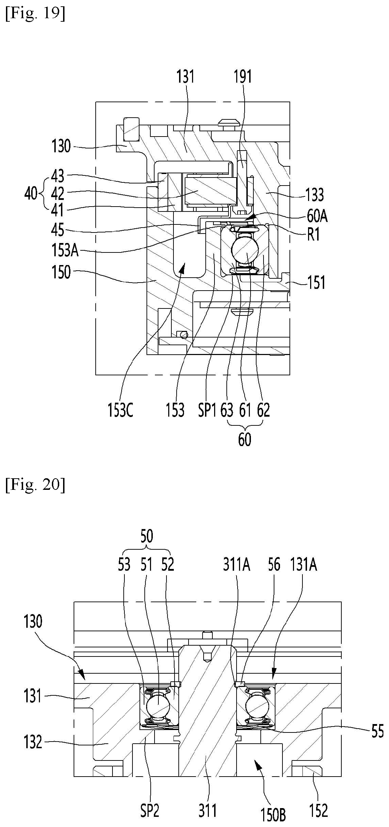

The wireless power transmission module (30) may include first and second ferrite cores (31, 33) and first and second coils (32, 34). The motor (40) may include a plurality of driving magnets (41), a motor core (42), and a yoke (43). The wireless power transmission module (30) wirelessly transmits power from the fixed part (1) to the rotating part (2). The wireless power transmission module (30) is coupled inside the stator housing (150) and the rotor housing (130) and may face each other. The first ferrite core (31) and the first coil (32) function as a wireless power receiving unit, and the second ferrite core (33) and the second coil (34) function as a wireless power transmitting unit. The wireless power transmitting unit (33, 34) transmits power wirelessly in the fixed part (1), and the wireless power receiving unit (31, 32) receives power wirelessly in the rotating part (2) and supplies power to respective components in the rotating part (2). The wireless power transmission module (30) enables operation of the transceiver (120) and substrates and systems connected thereto. When the motor core (42) rotates, the wireless power transmission module (30) may supply power to the motor core (42). The motor core (42) may be fixed to a bottom plate (131) by a fastening means (191), as shown in FIG. 19.

The wireless power transmitting unit (33, 34) is coupled within the stator housing (150), and the wireless power receiving unit (31, 32) may be coupled to the rotor housing (130). The wireless power transmission module (30) is disposed on an inner circumference region among regions of the stator housing (150) and the rotor housing (130), transmits and receives power wirelessly, and may reduce electrical influence on other components (e.g., motor) or parts.

The LiDAR driving device (100B) includes a motor (40) therein to rotate the rotating part (2). The motor (40) includes driving magnets having electromagnetic force. A yoke (43) of the motor (40) is disposed along an outer side of the plurality of magnets (41) to shield electromagnetic force. The yoke (43) functions as a back yoke. The yoke (43) and the plurality of magnets (41) are arranged in a circumferential direction, and the motor core (42) has a coil and faces the plurality of magnets (41). When power is supplied to the coil of the motor core (42), electromagnetic force is generated between the magnets (41) and the motor core (42). The motor core (42) may rotate together with the rotor housing (130), and the yoke (43) and the plurality of magnets (41) may be fixed together with the stator housing (150). Alternatively, the yoke (43) and the plurality of magnets (41) may be coupled to and rotate with the rotor housing (130), and the motor core (42) may be coupled to the stator housing (150) and fixed in position. The magnets (41) are permanent magnets.

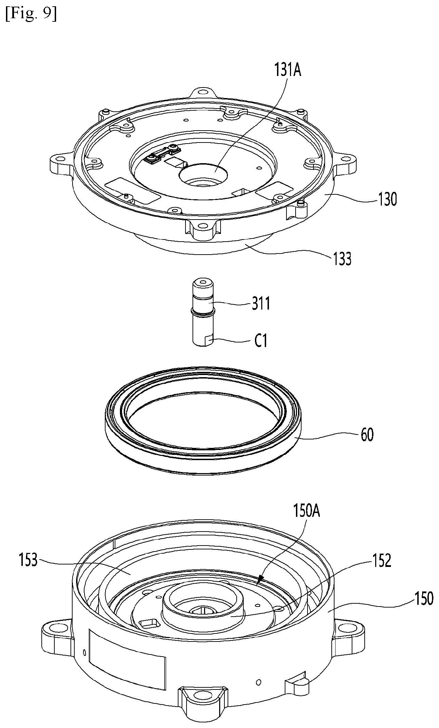

The stator housing (150) is a fixed frame or a first housing with a fixed position and may include a metal material or a non-metal material. For example, the metal material may include aluminum or an alloy thereof, and the non-metal material may include plastic. The rotor housing (150) is a rotating frame or a second housing that rotates about an axis and may include a metal material or a non-metal material. For example, the metal material may include aluminum or an alloy thereof, and the non-metal material may include plastic. As shown in FIG. 9, an inner side of an outer wall of the stator housing (150) includes a receiving region (150A) for insertion of components, and the rotor housing (150) may be seated on an inner upper side thereof. Further, the rotor housing (150) may include a receiving space at a lower portion to correspond to the receiving region (150A) and enable accommodation of components.

As shown in FIGS. 7 and 8, the stator housing (150) includes a bottom portion (151) extending from an outer wall toward a central shaft (161), and a first fixed side wall (152) and a second fixed side wall (153) protruding from the bottom portion (151) toward the second substrate (148). The rotor housing (130) includes a first rotating side wall (132) and a second rotating side wall (133) extending from a bottom plate (131) toward the bottom cover (180). The first fixed side wall (152) and the first rotating side wall (132) correspond to each other in a vertical direction, and lower portions of the second fixed side wall (153) and the second rotating side wall (133) may correspond to each other in a horizontal direction.

The first and second fixed side walls (152, 153) have a ring shape, and the first and second rotating side walls (132, 133) may have a ring shape. The first fixed side wall (152) and the first rotating side wall (132) are inner side walls of each housing (130, 150), and the second fixed side wall (153) and the second rotating side wall (133) are intermediate side walls of each housing (130, 150).

The wireless power receiving unit (31, 32) is accommodated in a space between the first and second rotating side walls (132, 133) and may be fixed to an outer circumference of the first rotating side wall (132) and a lower surface of the bottom plate (131). The wireless power transmitting unit (33, 34) is accommodated in a space between the first fixed side wall (152) and the second rotating side wall (133) and may be fixed to an outer circumference of the first fixed side wall (152) and an upper surface of the bottom portion (151).

The motor core (42) may be fixed to an inner circumference of the second rotating side wall (133) and a lower surface of the bottom plate (131), and the yoke (43) may be fixed on a stepped structure at an upper inner side of the outer wall of the stator housing (150). An inner surface of the yoke (43) has the plurality of magnets (41) attached thereto and arranged in a circumferential direction. The magnets (41) may face the motor core (42).

An outer side of the yoke (43) may overlap with the gap (11) in a horizontal direction. An upper end of the yoke (43) is disposed higher than an upper end of the gap (11), thereby suppressing inflow of moisture or foreign substances from the outside. The stator housing (150) may include discharge ports (18). The discharge ports (18) are disposed in plurality along an outer circumference of the stator housing (150), may be spaced apart from each other or arranged at equal angles about a central axis. An outlet of each discharge port (18) may be positioned lower than an inlet. The inlet of each discharge port (18) may be positioned at a corner between the bottom portion (151) and the outer wall of the stator housing (150) or at a bottom of an outer receiving space (150C) of the stator housing (150). The outlet of each discharge port (18) may be positioned at a lower outer surface of the stator housing (150). A bottom of the outer receiving space (150C) in which the inlets of the discharge ports (18) are disposed may be horizontal or inclined, and the inclined structure may have an outer side lower than an inner side.

A shielding cover (45) may be disposed below the motor (40). The shielding cover (45) may be disposed on an outer side of the second rotating side wall (133) of the rotor housing (130). The shielding cover (45) may be disposed in a region between the motor (40) and the first bearing member (60). The first bearing member (60) may be disposed on one side or below the motor (40). A part of the shielding cover (45) is disposed adjacent to the motor core (42) to block influence due to electromagnetic force. The shielding cover (45) is adhered or attached to a lower surface of the motor core (42), covers an entire lower surface of the motor core (42), and extends outward beyond the second fixed side wall (153) of the stator housing (150).

The shielding cover (45) may include a metal material, for example, an alloy of nickel and iron (e.g., Permalloy), and may include a magnetic material having very high permeability and low magnetic hysteresis loss. The alloy may have a nickel content greater than an iron content. Electromagnetic force generated by the motor (40), that is, leakage magnetic flux, may cause a bearing of the first bearing member (60) to be positioned in an abnormal direction, thereby increasing friction in the first bearing member (60) and increasing power consumption. In a LiDAR device, power consumption of a motor having inertial load during rotation is generated due to friction between a bearing and raceways (inner ring, outer ring), and such friction may rapidly increase power consumption in a low-temperature environment. To this end, the shielding cover (45) covers an upper portion and an outer side of the first bearing member (60) to shield magnetic force applied to a first bearing (61) of the first bearing member (60).

The LiDAR driving device (100B) may include one or more outer bearing members coupled to a region (60A, FIG. 19) between the stator housing (150) and the rotor housing (130), and one or more inner bearing members may be coupled to a region (i.e., 131A) between the rotor housing (130) and the central shaft (311). The first bearing member (60) may be slidably coupled to an inner side of the second fixed side wall (153) of the stator housing (150), thereby facilitating assembly.

The first bearing member (60) is an outer bearing member and includes a first bearing (61), a first inner ring (62), and a first outer ring (63), and a plurality of the first bearings (61) may be disposed between the first inner ring (62) and the first outer ring (62) . The first bearing member (60) may be coupled between the second fixed side wall (153) disposed on an outer side of the first bearing member (60) and the second rotating side wall (133) disposed on an inner side of the first bearing member (60).

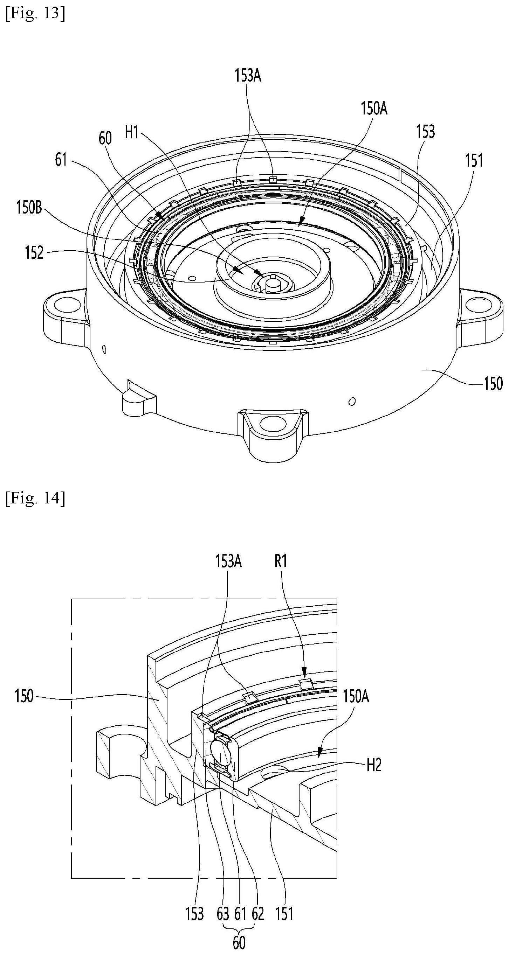

The first bearing member (60) is disposed on the bottom portion (151) of the stator housing (150), and the first inner ring (62) is disposed between the bottom portion (151) and an upper end of a recess (R1) of the second rotating side wall (133). The first outer ring (63) of the first bearing member (60) may be disposed between the bottom portion (151) and an inner protrusion (153A, see FIG. 13) of the second fixed side wall (153). The inner protrusion (153A) is bent inward from an upper end of the second fixed side wall (153), and a plurality thereof may be arranged at regular intervals. Each of the plurality of inner protrusions (153A) may be disposed on a region corresponding to each of the plurality of first bearings (61), thereby suppressing upward movement of the first bearing member (60) caused by the respective first bearings (61).

A width (difference between inner diameter and outer diameter) of the first bearing member (60) may be greater than a width (difference between inner diameter and outer diameter) of the second bearing member (50). An inner diameter of the first bearing member (60) may be larger than an outer diameter of the wireless power transmission module (30) and smaller than an inner diameter of the magnets (41). The inner diameter of the first bearing member (60) is larger than an outer diameter of the second bearing member (50), for example, larger by two times or more, thereby supporting and distributing a load or weight transmitted downward through a rotating part (1, FIG. 3) including a transceiver.

The inner protrusion (153A) of the second fixed side wall (153) may protrude in a stepped structure lower than an upper end of the second fixed side wall (153). That is, the protrusion (153A) may be formed in a stepped structure inward through a staking process with respect to the upper end of the second fixed side wall (153). The inner protrusion (153A) protruding inward from the upper end of the second fixed side wall (153) may be disposed on a straight line such as a horizontal straight line extending from an upper end of the recess (R1) of the second rotating side wall (133), or may be disposed lower than the straight line. Accordingly, the inner protrusion (153A) may press an upper end (i.e., convex curved surface) of the first outer ring (63) or prevent upward separation thereof. The inner protrusion (153A) may overlap with an upper portion of the first outer ring (63) in a vertical direction (axial direction).

The first inner ring (62) of the first bearing member (60) is fitted between the bottom portion (151) of the stator housing (150) and an upper end of an outer recess (R1) of the second rotating side wall (133), and a lower end of the second rotating side wall (133) includes outer protrusions (133A). The outer protrusions (133A) are provided in plurality, and the number thereof may be smaller than the number of the inner protrusions (153A). The number of the outer protrusions (133A) may be the same as the number of bottom holes (TH1) and may be smaller than the number of the inner protrusions (153A). This difference in number reflects that upward movement of the first bearing member (60) is greater than downward movement, and since there is no other structure supporting an outer upper portion of the first bearing member (60), the number of inner protrusions (153A) may be increased. The outer protrusions (133A) may protrude inward in a stepped structure at a position higher than a lower end of the second rotating side wall (133), and may press a lower outer side of the first inner ring (62) or prevent downward separation thereof. In addition, by supporting through upper and lower protrusions (153A, 133A) of the first bearing member (60), a driving device robust against external vibration and shock may be provided. The outer protrusions (133A) may overlap with an upper portion of the first inner ring (62) in a vertical direction (axial direction). A lower end of the outer protrusion (133A) of the second rotating side wall (133) may be disposed on a same line as an upper surface of a seating surface (SP1, see FIG. 19) of the bottom portion (151) of the stator housing (150) on which the first outer ring (63) is seated, or may be disposed at a higher position.

The second bearing member (50) is an inner bearing member and includes a second bearing (51), a second inner ring (52), and a second outer ring (53), and a plurality of the second bearings (51) may be disposed between the second inner ring (52) and the second outer ring (52) . The second bearing member (50) may be coupled between the first rotating side wall (132) disposed on an outer side of the second bearing member (50) and the central shaft (311) disposed on an inner side of the second bearing member (50). A horizontal position of the second bearing member (50) with respect to the central shaft (311) may be disposed above the first bearing member (60).

As shown in FIGS. 7, 8, 9, 18, and 20, a region (150B) between the central shaft (311) and the first fixed side wall (152) and the first rotating side wall (132) may be spaced apart by an outer diameter of the second bearing member (50). The second outer ring (53) of the second bearing member (50) may be disposed on a lower stop protrusion (SP2) of the first rotating side wall (132). A washer (55) is disposed between a lower portion of the second bearing member (50) and the stop protrusion (SP2) of the first rotating side wall (132), and the washer (55) distributes load or force transmitted in a vertical direction and reduces friction of the second bearing member (50) with other components. The washer (55) may have a wave shape in a circumferential direction, that is, a donut shape having different heights. A stop ring (56) is disposed on an upper portion of the second bearing member (50), and the stop ring (56) is a snap ring fitted into a coupling groove (311A) on an upper outer side of the central shaft (311), thereby preventing upward separation of the second bearing member (50) and absorbing vibration and shock thereof. The stop ring (56) may be disposed around an upper portion of the second inner ring (52).

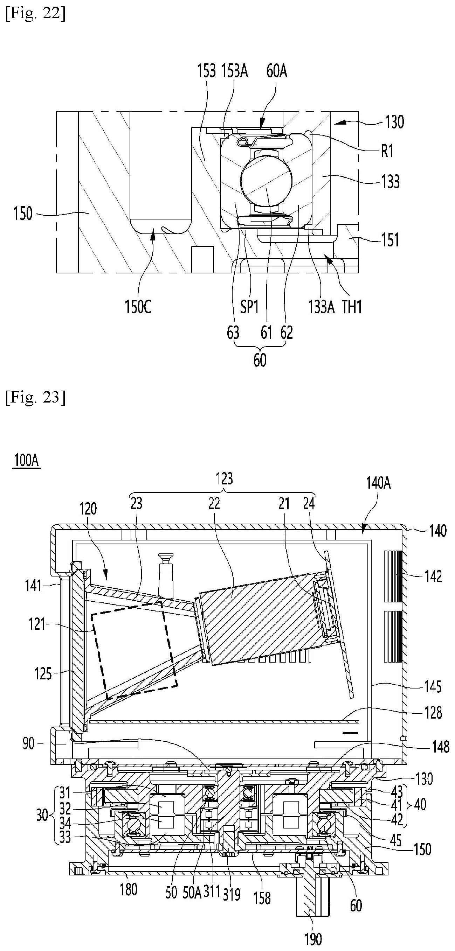

One or more bearing members may be disposed in the region (150B) between the central shaft (311) and the first fixed side wall (152) and the first rotating side wall (132). For example, the second bearing member (50) may be disposed on an outer side of the central shaft (311) in one or more units. For example, as shown in FIG. 23, second bearing members (50, 50A) may be respectively disposed on an upper circumference and a lower circumference of the central shaft (311).

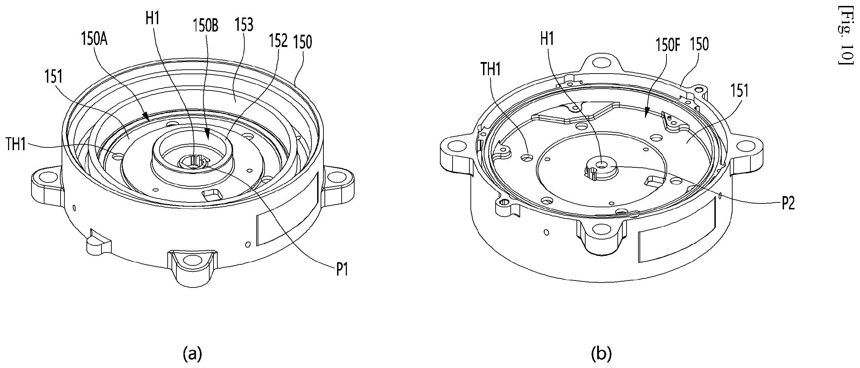

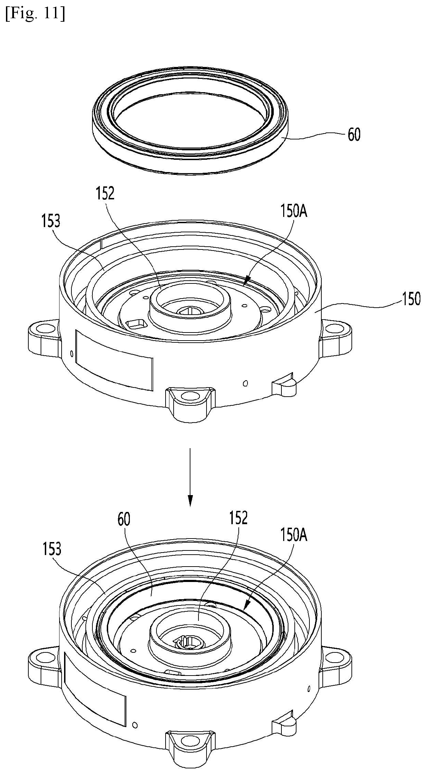

Referring to FIGS. 9 to 21, an assembly process of the LiDAR driving device will be described. As shown in FIGS. 9 to 11, after positioning the first bearing member (60) on the stator housing (150), the first bearing member (60) is assembled to an inner circumferential surface of the second fixed side wall (153). A central hole (H1) is formed at a center of the bottom portion (151) of the stator housing (150), and a plurality of bottom holes (TH1) are arranged along an area overlapping a portion of the first bearing member (60) on an outer side of the bottom portion (151). The first bearing member (60) is disposed between the first and second fixed side walls (152, 153).

At a center of the bottom portion (151) of the stator housing (150), a rotation preventing portion (P1) is disposed around the central hole (H1), and a bottom support portion __ (P1)__ is disposed at a bottom of the central hole (H1). The rotation preventing portion (P1) and the bottom support portion __ (P1)__ are disposed at an inner end of the bottom portion (151) of the stator housing (150).

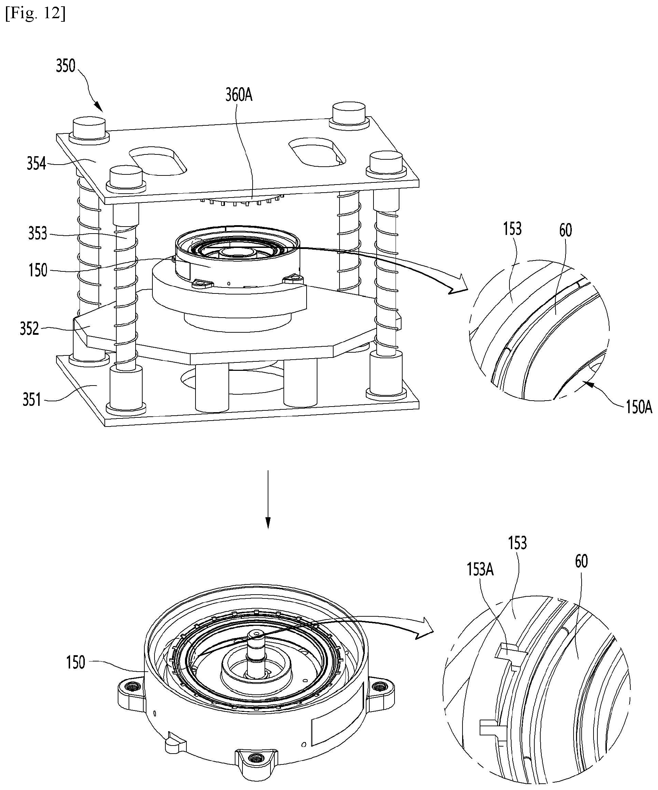

As shown in FIG. 12, the stator housing (150) to which the first bearing member (60) is coupled is positioned on an inner support (352) of a staking jig (350). Here, the support (352) is disposed on a base plate (351) at a predetermined interval, and a moving plate (354) is disposed in a region facing the base plate (351). A plurality of vertical moving members (353) support between the base plate (351) and the moving plate (354) and may move the moving plate (354) up and down.

An outer ring staking jig (360A) is coupled to a lower portion of the moving plate (354), and the outer ring staking jig (360A) has a plurality of jigs protruding from a lower circumference thereof. When the moving plate (354) moves downward by pressure and presses the upper end of the second fixed side wall (153) of the stator housing (150), inner protrusions (153A) may be formed around the upper end of the second fixed side wall (153) by the plurality of jigs. The inner protrusions (153A) have stepped grooves (R2) lower than the upper end of the second fixed side wall (153) and are disposed on an upper end of the first outer ring (63) of the first bearing member (60). The inner protrusions (153A) may suppress upward movement of the first bearing member (60). A plurality of bottom holes (TH1) are arranged in a region overlapping the first inner ring (62) of the first bearing member (60) in a vertical direction. That is, when viewed from below the stator housing (150), the first inner ring (62) may be exposed through the plurality of bottom holes (TH1).

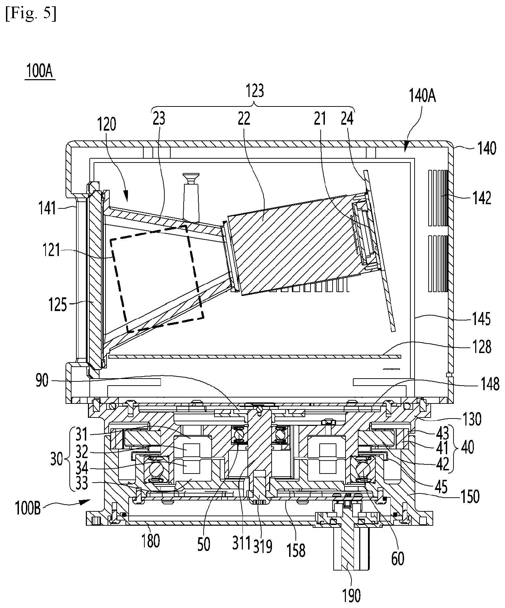

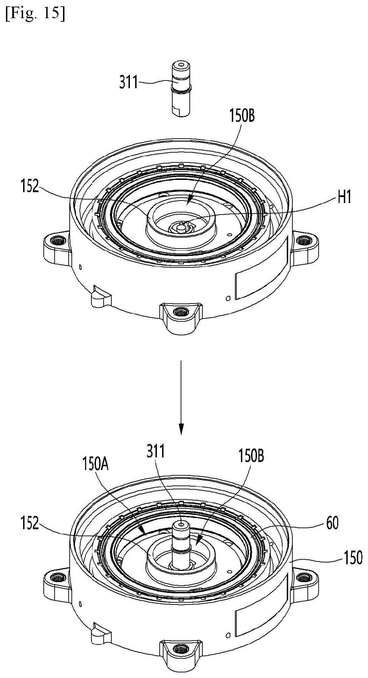

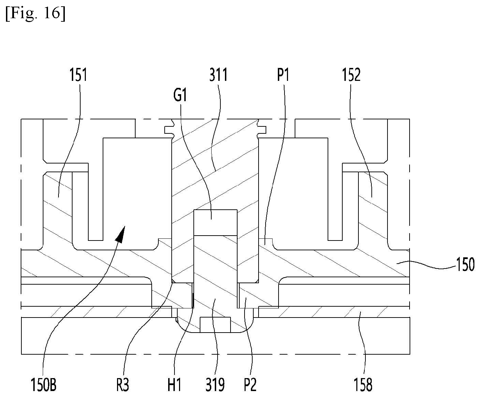

As shown in FIGS. 15 and 16, the central shaft (311) is inserted into a central portion of the stator housing (150), and a lower end of the central shaft (311) is supported and fixed to the stator housing (150) through a fastening means (139). At this time, the bottom support portion (P2) of the stator housing (150) supports the lower end of the central shaft (311), and the rotation preventing portion (P1) may be coupled to a lower circumference of the central shaft (311), thereby supporting the lower portion and preventing rotation. An inner shaft groove (R3) of the stator housing (150) is formed by the bottom support portion (P2) and the rotation preventing portion (P1) and supports a lower portion of the central shaft (311). A top-view shape of the shaft groove (R3) may be a non-circular shape, for example, an irregular shape or a polygonal shape. Coupling of the first bearing member (60) and the central shaft (311) is performed before a first substrate (158) and a bottom cover (180) shown in FIG. 5 are coupled to the stator housing (150).

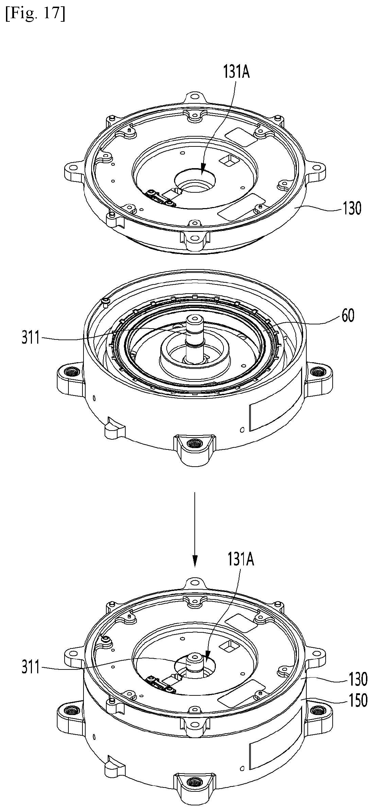

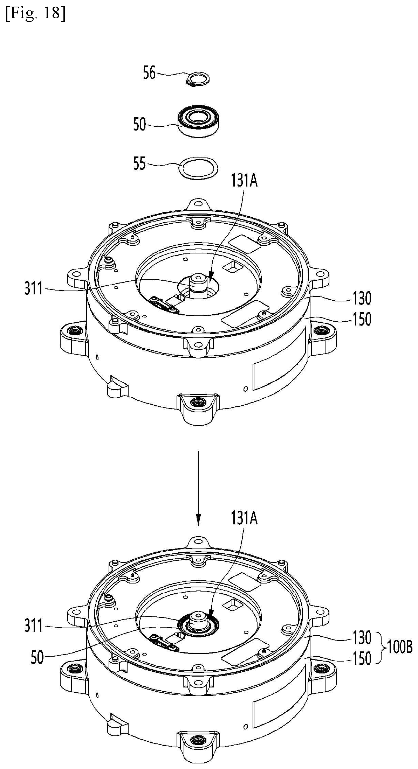

As shown in FIGS. 17 and 18, the rotor housing (130) is coupled onto the stator housing (150), and at this time, the central shaft (311) may be coupled to an upper hole (131A) of the rotor housing (130). At this time, as shown in FIG. 19, the stator housing (150) and the rotor housing (130) may be assembled in a state in which the motor (40) is coupled on an outer circumference thereof.

As shown in FIG. 20, when the rotor housing (130) is coupled to the stator housing (150), the second bearing member (50) is coupled to the upper hole (131A) of the rotor housing (130). At this time, after positioning the washer (55) on the lower stop protrusion (SP2) of the first rotating side wall (132) of the rotor housing (130), the second bearing member (60) is assembled, and the stop ring (56) is fitted into the coupling groove (311A) of the central shaft (311) to support an upper portion of the second bearing member (60) . Accordingly, elastic support is provided to a lower portion of the second bearing member (60) and upward separation may be prevented.

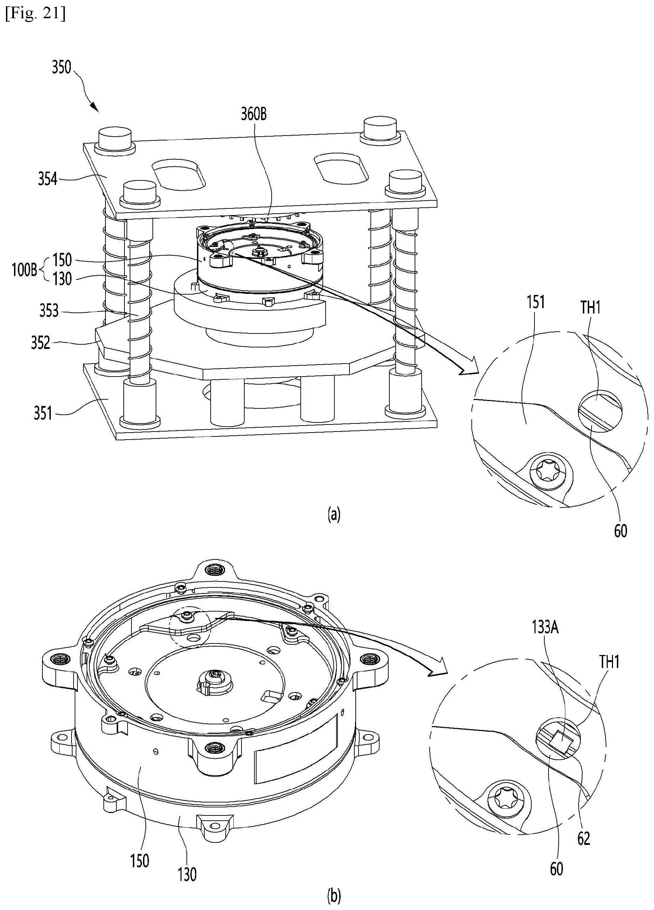

As shown in FIGS. 21 and 22, when the second bearing member (50) is assembled between the rotor housing (130) and the central shaft (311), the driving device (100B) is placed on the support (352) of the staking jig (350). At this time, the driving device (100B) is positioned such that a bottom of the stator housing (150) is exposed upward, and then an inner lower side of the second rotating side wall (133) is pressed by an inner ring staking jig (360B) through the bottom holes (TH1) of the stator housing (150). Accordingly, the inner lower side of the second rotating side wall (133) forms outer protrusions (133A) protruding outward, and has a stepped structure from the lower end of the second rotating side wall (133). The outer protrusions (133A) press a lower end of the first inner ring (62) of the first bearing member (50) .

An upper end of the first fixed side wall (153) protrudes higher than an upper end of the first bearing member (60), thereby providing a structure capable of pressing the inner protrusions (153A) with a jig. A lower end of the second rotating side wall (133) protrudes lower than a lower end of the first bearing member (60), thereby providing a structure capable of pressing the outer protrusions (133A) with a jig. The lower end of the second rotating side wall (133) may extend lower than an upper surface of the bottom portion (151) of the stator housing (150), and for this purpose, the bottom portion (151) may include a recess (151B) in which the lower end of the second rotating side wall (133) is seated.

When the bearing members (50, 60) are coupled in a region between the stator housing (150) and the rotor housing (130) and in a region between the rotor housing (130) and the central shaft (311), a substrate and a bottom cover (180), etc. are coupled to complete assembly of the driving device. Accordingly, the first bearing member (60) can distribute and support a large load applied to the driving device (100B), and by positioning the plurality of bearing members (50, 60) in regions having large radial differences, vibration or shock transmitted from outside can be mitigated.

As shown in FIG. 23, a plurality of bearing members (50, 50A) are provided in a vertical direction at an upper portion and a lower portion of the central shatft (311) , and these can distribute a load applied around the central shaft (311) and mitigate external vibration and shock.

The features, structures, effects, and the like described in the embodiments above are included in at least one embodiment of the present invention and are not necessarily limited to only one embodiment. Furthermore, the features, structures, effects, and the like illustrated in each embodiment may be combined or modified with respect to other embodiments by those skilled in the art. Therefore, matters related to such combinations and modifications should be interpreted as being included within the scope of the present invention. In addition, although the embodiments have been mainly described above, these are merely examples and do not limit the present invention, and those skilled in the art to which the present invention pertains will understand that various modifications and applications not exemplified above are possible without departing from the essential characteristics of the present embodiment. For example, each component specifically shown in the embodiment may be modified and implemented. Differences related to such modifications and applications should be interpreted as being included within the scope of the present invention defined in the appended claims.

## Claims

1. A stator housing having a first fixed side wall and a second fixed side wall arranged in a ring shape from an inner side to an outer side, and having a lower central hole;
a central shaft;
a rotor housing having an upper central hole, a first rotating side wall disposed around an outer circumference of the central shaft, and a second rotating side wall disposed between the first rotating side wall and the second fixed side wall;
a first bearing member coupled between an inner side of the second fixed side wall and an outer side of the second rotating side wall; and
a second bearing member coupled between the central shaft and an inner side of the first rotating side wall.

2. The LiDAR driving device according to claim 1, wherein the first fixed side wall includes a plurality of inner protrusions protruding toward an upper outer side of the first bearing member along an inner side of an upper end thereof.

3. The LiDAR driving device according to claim 2, wherein the second rotating side wall includes a plurality of outer protrusions protruding toward a lower inner side of the first bearing member along an inner side of a lower end thereof.

4. The LiDAR driving device according to claim 3, wherein a bottom portion of the stator housing has a plurality of bottom holes corresponding to the respective outer protrusions.

5. The LiDAR driving device according to claim 3, wherein a number of the plurality of inner protrusions is greater than a number of the plurality of outer protrusions.

6. The LiDAR driving device according to claim 3, wherein an upper end of the second fixed side wall is positioned higher than an upper end of the first bearing member.

7. The LiDAR driving device according to claim 6, wherein a lower end of the second rotating side wall is positioned lower than an upper end of the second bearing member,
and wherein the second rotating side wall has a recess in which a first inner ring of the first bearing member is disposed at a lower inner side thereof.

8. The LiDAR driving device according to any one of claims 1 to 7, wherein the stator housing includes a bottom support portion disposed at a lower end of the central shaft and a rotation preventing portion disposed around a lower circumference of the central shaft,
wherein the bottom support portion and the rotation preventing portion are disposed at an inner end of a bottom portion of the stator housing,
and wherein the first and second fixed side walls protrude from the bottom portion.

9. The LiDAR driving device according to claim 8, further comprising a fastening means fastened to a lower portion of the central shaft through a central hole in the bottom support portion.

10. The LiDAR driving device according to any one of claims 1 to 7, further comprising:
a lower stop protrusion extending from the first rotating side wall toward a lower outer side of the second bearing member;
a stop ring disposed around an upper portion of the second bearing member and coupled to the central shaft; and
a washer disposed between the stop protrusion and the second bearing member.

11. The LiDAR driving device according to any one of claims 1 to 7, wherein the first bearing member has an inner diameter that is at least twice as large as an outer diameter thereof and a width greater than a width of the second bearing member.

12. A LiDAR device comprising:
a stator housing having a first fixed side wall and a second fixed side wall arranged in a ring shape from an inner side to an outer side, and having a lower central hole;
a central shaft;
a rotor housing having an upper central hole, a first rotating side wall disposed around an outer circumference of the central shaft, and a second rotating side wall disposed between the first rotating side wall and the second fixed side wall;
a first bearing member coupled between an inner side of the second fixed side wall and an outer side of the second rotating side wall;
a second bearing member coupled between the central shaft and an inner side of the first rotating side wall;
a motor disposed between the stator housing and the rotor housing and having a magnet and a core; and
a transceiver coupled to the rotor housing and configured to transmit and receive a laser beam,
wherein an inner diameter of the second bearing member is greater than an outer diameter of the first bearing member and smaller than an inner diameter of the magnet of the motor,
and wherein the rotor housing and the transceiver rotate about the central shaft.

13. The LiDAR device according to claim 12, wherein a width of the first bearing member is greater than a width of the second bearing member,
and further comprising a wireless power transmission module disposed between an inner side of the second rotating side wall and outer sides of the first fixed side wall and the first rotating side wall.

14. The LiDAR device according to claim 12, wherein the first fixed side wall includes a plurality of inner protrusions protruding toward an upper outer side of the first bearing member along an inner side of an upper end thereof,
and wherein the second rotating side wall includes a plurality of outer protrusions protruding toward a lower inner side of the first bearing member along an inner side of a lower end thereof.

15. The LiDAR device according to any one of claims 12 to 14, wherein the stator housing includes a bottom support portion disposed at a lower end of the central shaft and a rotation preventing portion disposed around a lower circumference of the central shaft,
wherein the bottom support portion and the rotation preventing portion are disposed at an inner end of a bottom portion of the stator housing,
wherein the first and second fixed side walls protrude from the bottom portion,
and further comprising a fastening means fastened to a lower portion of the central shaft through a central hole in the bottom support portion.
